(19) Europäisches Patentamt
European Patent Office
Office européen des brevets

(11) Publication number : 0 459 171 B1

# (12) EUROPEAN PATENT SPECIFICATION

(45) Date of publication of patent specification : **29.12.93 Bulletin 93/52**

(51) Int. Cl.$^5$ : **E21B 37/06**

(21) Application number : **91107098.5**

(22) Date of filing : **02.05.91**

## (54) Method for inhibition of scale and scale inhibiting composition.

(30) Priority : **31.05.90 US 531280**

(43) Date of publication of application : **04.12.91 Bulletin 91/49**

(45) Publication of the grant of the patent : **29.12.93 Bulletin 93/52**

(84) Designated Contracting States : **DE FR GB NL**

(56) References cited :
**DE-A- 3 841 030**
**US-A- 4 860 829**

(73) Proprietor : **MOBIL OIL CORPORATION**
**3225 Gallows Road**
**Fairfax, Virginia 22037-0001 (US)**

(72) Inventor : **Hen, John**
**42 Richmond Drive**
**Skillman, New Jersey 08558 (US)**

(74) Representative : **Curtis, Philip Anthony**
**Patent Department, Mobil Court 3 Clements Inn**
**London WC2A 2EB (GB)**

EP 0 459 171 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to a method for the inhibition of scale formation particularly from oil well brines. The invention also relates to a scale inhibiting composition.

In the production of crude oil from underground wells, mineral scales such as barium sulfate, strontium sulfate, calcium sulfate and calcium carbonate are often formed on wellbore and equipment surfaces where oil and water containing dissolved salts are coproduced. The formation of scale can slow the oil production rate and, at the extreme, stop production completely. An expedient often utilized is to inject or "squeeze" a solution of a scale inhibitor such as a polyphosphonate or a polyacrylic acid into the reservoir rock and allow the absorbed inhibitor to desorb during fluids production. In practice, however, the desorption process is often found to be quite rapid once production is resumed necessitating frequent shutdowns for additional treatments. This has the effect of substantially reducing the productivity of the well.

Various improvements in the absorption and desorption of scale inhibitors have been proposed.

US-A-3,827,977, discloses the in-situ deposition in the porous rock formation adjacent to a well bore of a polyvalent metal salt of a polyacrylic acid or partially hydrolyzed polyacrylamide inhibitor by introducing into the porous formation a strongly acidic aqueous solution of a salt of the inhibitor and the polyvalent metal. The acid is partially neutralized by the reservoir liquid causing the polyvalent salt of the inhibitor to phase separate on the porous surfaces.

US-A-4,357,248 discloses the inhibition of scale formation in a producing well by injecting a self-reacting alkaline aqueous solution of a pH-lowering reactant, a scale inhibitor and a compound containing multivalent cations, which solution subsequently precipitates a slightly soluble scale inhibitor within the reservoir.

US-A-4,602,683 discloses the inhibition of scale deposition during the operation of an oil well by injecting an inhibitor solution into a subsurface brine producing formation at a high first pH, and thereafter subjecting the solution to a fluid or substance which reduces the higher first pH to a lower second pH causing precipitation of the scale formation in the formation.

According to one aspect of the invention there is provided a method for the inhibition of scale deposition on the surfaces of a well coproducing oil and scale forming brines comprising injecting into the well reservoir an acidic (aqueous) solution at a first pH containing dissolved therein a scale inhibitor, multivalent metal ions, and a heat sensitive pH increasing substance which decomposes at elevated temperatures liberating an alkaline compound such that the solution is inherently heated by the higher ambient reservoir temperature to a temperature at which the alkaline compound is liberated from the heat sensitive substance this raising the pH of the solution to a point at which a sparingly soluble multivalent metal salt of the scale inhibitor is phase separated from the solution on the porous surfaces of the reservoir rock formation, providing for a slow release of inhibitor into the produced brines when the well is in its production phase.

According to another aspect of the invention there is provided as a new composition of matter, an acidic aqueous solution containing dissolved therein a scale inhibitor, multivalent metal ions, and a heat sensitive, pH-increasing substance which decomposes at elevated temperatures liberating an alkaline compound.

Unlike the case with some of the prior art methods described previously, the method of this invention provides for the efficient placement of a sparingly soluble scale inhibitor in the well reservoir capable of slowly releasing inhibitor into the produced brines, without the requirement for efficient mixing with such brines, which is difficult to satisfy in some sandstone formations, or the necessity for using more than one solution for the injection of the inhibitor. The method greatly enhances the retention of scale inhibitor while keeping to a minimum damage of the reservoir rock which could be caused by excessive precipitation of multivalent metal salt of inhibitor on the porous reservoir surfaces.

The scale inhibitors contemplated under this invention contain a multiplicity of reactive groups, for example, carboxylate and/or phosphonate, which are capable of interacting with the polyvalent metal ions in the produced brines to prevent or minimize the deposition of scale on reservoir, wellbore, and equipment surfaces. The inhibitor, may be, for example, a polycarboxylate, e.g., a polymeric polycarboxylate such as a homopolymer or copolymer (composed of two or more co-monomers) of an alpha, beta-ethylenically unsaturated acid monomer such as acrylic acid, methacrylic acid, a diacid such as maleic acid (or maleic anhydride), itaconic acid, fumaric acid, mesoconic acid, citraconic acid and the like, monoesters of diacids with alkanols, e.g., having 1-8 carbon atoms, and mixtures thereof. When the inhibitor is a copolymer, the other component monomer may be any alpha, beta-ethylenically unsaturated monomer with either a non-polar group such as styrene or olefinic monomers, or a polar functional group such as vinyl acetate, vinyl chloride, vinyl alcohol, alkyl acrylates, vinyl pyridine, vinyl pyrrolidone, acrylamide or acrylamide derivatives, etc., or with an ionic functional group such as styrenesulfonic acid, 2-acrylamido-2-methylpropanesulfonic acid (AMPS), vinylsulfonic acid, or vinylphosphonic acid. Certain of the foregoing copolymers may be prepared by aftertreating a homopolymer or a different copolymer, e.g., copolymers of acrylic acid and acrylamide by partially hydrolyzing a polyacrylamide.

The contemplated polymeric polycarboxylate inhibitors also include the foregoing homopolymers and copolymers chemically modified to include other function groups contributing to their performance, e.g., the phosphino-polyacrylic acids disclosed in US-A-4,105,551 and sold under the trademark "Belsperse 161" or "Belasol S-29" by Ciba Geigy. The molecular weight range of the polymeric polycarboxylate inhibitor utilized in this invention may be, for example, from about 500 to 10,000.

Also suitable as the scale inhibitor of this invention are the monomeric and polymeric phosphonates, e.g., aminomethylenephosphonates such as aminotri(methylenephosphonic acid), ethylenediaminetetra(methylenephosphonic acid), hexamethylenediaminetetra(methylenephosphonic acid), and diethylenetriaminepenta(methylenephosphonic acid), 1-hydroxyethylidene-1,1-diphosphonic acid, and homopolymers and copolymers of vinylphosphonate.

Another class of inhibitors which may be used in practicing the method of this invention are organic phosphate esters such as phosphate esters of polyols and their salts containing one or more 2-hydroxyethyl groups, and hydroxylamine phosphate esters obtained by reacting polyphosphoric acid or phosphorus pentoxide with hydroxylamines such as diethanolamine or triethanolamine. Some examples of the class of inhibitors are disclosed in Jack C. Cowan and Donald J. Weintritt, Water-Formed Scale Deposits, (Houston: Gulf Publishing Co., 1976), 284 and 285.

The inhibitor may be present in the injected solution in an amount, for example, in the range of about 0.25 to 15 wt.% preferably about 0.5 to 5 wt.%, based on the total weight of the solution.

The multivalent metal ions are those capable of forming sparingly soluble salts of the scale inhibitor at a pH higher than that of the initial injected solution. Some multivalent metal ions which can be used are, for example, alkaline earth metal ions, particularly calcium and magnesium, aluminum (+3), chromium (+3), iron (+3), titanium (+3), zirconium (+4), zinc (+2), and copper (+2). The preferred multivalent metal ions are calcium and magnesium. The ions are utilized in the form of a water-soluble salt, preferably containing an anion which does not contribute to scale formation, e.g., chloride or nitrate. The amount of dissolved multivalent metal ions employed in the solution is in the range, for example, of about 0.05 to 5.0, preferably about 0.20 to 2.50 equivalents per equivalent of inhibitor.

The heat sensitive, pH-increasing compound may be, for example, urea or a urea derivative, having the formula:

$$R^1R^2NCONR^3R^4$$

where the R's are the same or different and each may be, for example, hydrogen, an alkyl group containing 1 to 8 carbon atoms or an aromatic group, e.g., phenyl or tolyl. Compounds which may be employed are, for example, urea, 1-methylurea, 1,1-dimethylurea, 1,3-dimethylurea, 1,1,3-trimethylurea, 1-ethylurea, 1,1-diethylurea, 1,3-diethylurea, 1-phenylurea, 1-methyl-3-phenylurea and 1-ethyl-1-phenylurea.

When urea or any of the contemplated urea derivatives are heated to an elevated temperature, e.g., at least about 40°C such as occurs in the reservoirs of producing wells, they liberate ammonia and/or amine in accordance with the following equation.

$$R^1R^2NCONR^3R^4 + H_2O \xrightarrow{\Delta H} NHR^1R^2 + NHR^3R^4 + CO_2$$

The liberated ammonia or amine is a basic substance which acts to increase the pH of the injected solution to a level at which a sparingly soluble multivalent metal salt of the inhibitor phase separates and slowly releases inhibitor into the reservoir during production thus minimizing scale deposition. The $CO_2$ liberated may or may not dissolve in the brine depending on the reservoir conditions. In any case there is a two to one molar ratio of amine to $CO_2$ liberated.

Another group of heat sensitive pH increasing compounds which may be used are organic azides containing the group -N=N=N. For example acyl azides having the formula RCON=N=N, on being heated to above about 80°C, tend to rearrange to the isocyanate R-N=C=O with the liberation of nitrogen ($N_2$); the isocyanate then reacts with water to yield the amine and $CO_2$ in accordance with the following equation:

$$R{-}N{=}C{=}O + H_2O \xrightarrow{\Delta H} RNH_2 + CO_2$$

Since one mole of $CO_2$ is released with each mole of amine, acyl azides are useful in the special case where the produced water is fully saturated with native $CO_2$ under reservoir conditions, and the $CO_2$ liberated from the reaction goes into the oil phase. Under these conditions, the amine has the effect of increasing the pH of

the inhibitor solution providing for the phase separation and subsequent slow release of the multivalent metal salt of the inhibitor, as described previously in connection with the use of urea or a urea derivative as the heat sensitive substance.

Azides which may be used are, for example, acetyl azide, propionyl azide, malonyl azide, succinyl azide, phthaloyl azide and other acyl diazides.

Other heat sensitive base releasing materials which may be used are, for example, cyanic acid, and amines which have been previously sorbed into activated carbon or a similar sorption matrix.

The heat sensitive pH increasing substance is present in an amount sufficient to reduce the pH in the reservoir sufficiently to effect the phase separation on the porous surfaces of the reservoir of all or a significant portion of the inhibitor as its sparingly soluble multivalent metal salt, such that an adequate amount of inhibitor is fed into the well formation during the production phase of the well to significantly inhibit scale deposition. In many cases, the heat sensitive pH-increasing substance will be utilized in the original inhibitor solution to be injected in an amount of about 0.01 to 5.0 wt.%, preferably about 0.2 to 2.0 wt.% based on the weight of the solution, and sufficient sparingly soluble multivalent salt of inhibitor is deposited on the surfaces of the well formation to maintain the concentration of inhibitor in the produced brine in the range of about 0.05 to 50 ppm, preferably about 0.5 to 10 ppm.

As stated, in order to prevent phase separation or precipitation of the multivalent salt of the inhibitor in the solution to be injected, such solution must have an initial pH in the acidic range, e.g., about 1.0 to 6.0, preferably 2.5 to 4.5. Such acidity may be obtained at least partially by the use of an acidic inhibitor. However, if the inhibitor is not sufficient for the purpose, additional acidity of the initial solution may be obtained by the addition of a strong acid, e.g., hydrochloride or nitric acid, or a combination of strong and weak acids. Sulfuric acid is generally not used for this purpose since sulfate ions can contribute significantly to scale deposition.

Substantially any source of water may be used as the aqueous solvent in the preparation of the initial inhibitor solution to be injected, e.g., sea water or inland surface or underground waters. However, the nature of the initial aqueous solvent utilized could effect the quantity and possibly the nature of the added inhibitor solution components to obtain the optimum properties of the solution in carrying out the inventive process.

The inhibitor solution is injected or squeezed into the reservoir formation using techniques well-known in the art. In general, the benefits of the process will he obtained if the temperature within the reservoir formation is, for example, in the range of about 40 to 200, preferably about 50 to 150°C.

The invention is further illustrated by the following examples. In Examples 1 to 3, the scale inhibitor was a phosphino-polyacrylic acid (PPA), produced as shown in US-A-4,105,551 and sold Ciba Geigy under the trademark "Belsperse 161", and having an average molecular weight of 3000-4000, a specific gravity of 1.26, a pH neat of less than 3.5, a pH in 1% aqueous solution of 2 to 3, and a phosphorous content (as P) of 0.86%; the multivalent metal ions were calcium added as calcium chloride; and the heat sensitive pH increasing substance was urea. In all the examples the sea water utilized as the aqueous solvent medium had the following composition:

Table 1

| Components | Concentration, grams/liter |
|---|---|
| $MgCl_2\ 6H_2O$ | 11.70 |
| $CaCl_2\ 2H_2O$ | 1.47 |
| KCl | 0.70 |
| $Na_2SO_4$ | 3.92 |
| NaCl | 25.10 |
| de-ionized $H_2O$ to 1 liter | |

Example 1

This example illustrates the effect of pH in causing phase separation at 100°C of a solution of PPA and calcium ions.

A solution was prepared of 3.52 wt.% PPA and 0.33 wt.% of calcium ions in sea water. The pH of five samples of this solution was adjusted to five different levels and each sample was held at 22 hours at 100°C during which the samples were monitored for hazing and phase separation. The results are shown in Table 2. No change from the initial pH of any of the samples occurred as a result of the heat treatment.

Table 2

| Sample | 1A | 1B | 1C | 1D | 1E |
|---|---|---|---|---|---|
| pH | 3.08 | 3.50 | 3.75 | 4.00 | 4.50 |
| minutes to initial haze | none | none | none | 1.0 | 1.0 |
| separated layer after 22 hours | none | none | none | very small | small |

As indicated in Table 2, no phase separation occurred at pH's up to 3.75 over a period of 22 hours. However, almost immediate hazing (after one minute) and eventual phase separation of a clear and small bottom layer was observed at pH's of 4.00 and 4.50 with that at 4.50 being slightly larger than at 4.00. Thus, the results indicate that the onset of phase separation (initial hazing) is a sharp function of pH at 100°C.

Example 2

This example illustrates the effect of a heat sensitive pH-increasing substance such as urea in obtaining the advantages of this invention.

Urea in an amount of 0.80 wt.% based on the weight of the solution was added to the solution of Example 1, and four samples of the modified solution were adjusted to different pH values from 3.67 to 2.75. These samples plus, for comparison purposes, a sample to which no urea was added and adjusted to a pH of 5.00, were held at 100°C for 24 hours. The effect of the urea in terms of pH increase and phase separation of the inhibitor, indicated by time initial haze and percent of inhibitor phase separated, is shown in Table 3 wherein the values of initial pH were measured at 25°C before any heat treatment, and those of final pH were measured at 25°C after the heat treatment.

Table 3

| Sample | 2A | 2B | 2C | 2D | 2E |
|---|---|---|---|---|---|
| % urea | 0 | 0.8 | 0.8 | 0.8 | 0.8 |
| initial pH | 5.00 | 3.67 | 3.55 | 3.28 | 2.75 |
| final pH | 5.00 | 5.42 | 5.10 | 4.80 | 4.55 |
| time to initial haze | 1 min. | 1.2 hr | 1.8 hr | 3.8 hr | 5.2 hr |
| % inhibitor phase separated | 26 | 41 | 38 | 35 | 36 |

Table 3 shows that in contrast with sample 2A containing no urea in which phase separation occurred almost immediately at a pH of 5.00, samples 2B to 2E exhibited times to initial haze of 1.2 to 5.2 hours at initial pH's of between 3.67 and 2.75, indicating much better control of onset time for phase separation.
Moreover, this control was accompanied by a rise in the pH to values between 5.42 and 4.55 caused by the decomposition of urea which in turn brought about the phase separation of substantial proportions of the inhibitor from the initial solution, viz., from 35 to 41%, for subsequent slow release into the reservoir during the production phase.

Example 3

This example illustrates the effect of the inventive process on the deposition of inhibitor in the porous structure of berea sandstone cores, which simulates the structures of certain reservoir rock formations, and the subsequent slow release or desorption of the inhibitor from such cores.

Coreflood studies were conducted on three of the inhibitor solutions shown in Example 2, viz., samples 2A, 2B and 2D, and an additional control solution containing 3.52 wt.% of PPA in sea water with no added calcium or urea. Berea sandstone cores with permeability to nitrogen of 200 millidarcies and dimensions of 1" diameter by 3" length (2.5cm by 7.6cm), were presaturated with a brine 1 (simulating a well produced brine) at 95°C in a Hassler flow cell. A 0.4 pore volume slug of inhibitor solution in sea water in injected at 20 ml per hour, followed by 3.0 ml afterflush with sea water. The core was shut-in overnight to allow equilibrium retention of the inhibitor prior to flowing back with brine 1 until no return of inhibitor was measured of until significant plugging occurred.

The composition of brine 1 is shown in Table 4.

Table 4

| Components | Concentration, grams/liter |
|---|---|
| MgCl2 6H2O | 0.77 |
| CaCl2 2H2O | 2.00 |
| KCl | 0.66 |
| BaCl2 2H2O | 0.24 |
| SrCl2 6H2O | 0.53 |
| NaCl | 49.19 |
| de-ionized H2O to 1 liter | |

The coreflood with solution sample 2A containing 0.33 wt.% of added calcium ions and no added urea, and having an initial pH of 5.0, plugged after overnight shut-in. Several attempts to flow back with brine 1 failed and the coreflood was terminated. Plugging probably occurredearly in the shut-in period as indicated by the fact that the solution required only one minute at 100°C to produce haze (see Example 2), due to the insolubility of the calcium salt of PPA at the relatively high pH of 5.0.

Trials with the remaining samples did not result in plugging during the overnight shut-in period. Results of all the trials are shown in Table 5, where "PV at Zero Inhibitor" indicates the number of pore volumes of brine 1 passing through the core until no release of inhibitor was measured.

Table 5

| Sample | % Calcium | % Urea | Initial pH | PV at Zero Inhibitor |
|---|---|---|---|---|
| 2A | 0.33 | 0.0 | 5.0 | core plugged |
| inhibitor only | 0.00 | 0.0 | 4.1 | 50 |
| 2B | 0.33 | 0.8 | 3.67 | 426 |
| 2D | 0.33 | 0.8 | 3.28 | 905 |

The results show that inhibitor solutions containing both multivalent ions such as calcium and a heat sensitive pH increasing substance such as urea makes possible a much higher retention of inhibitor in a porous structure and a subsequent release of inhibitor during the passage of a much larger volume or produced brines, than the use of an inhibitor solution not containing these additives. Moreover, the solutions containing both additives do not cause the rapid plugging which results from the use of an equivalent solution containing the multivalent ions but no heat sensitive pH-increasing substance.

Example 4

This example illustrates the effect of a heat sensitive pH-increasing substance such as urea in the delayed phase separation of a sparingly soluble calcium salt of a phosphonate scale inhibitor at 100°C.

A solution was prepared of 3.52 wt.% of diethylenetriaminepenta(methylenephosphonic acid) (DETPMP available from Monsanto as a 50 wt.% solution under the trademark "Dequest 2060") and 0.41 wt.% of calcium ions added as calcium chloride dihydrate in sea water. The pH of three samples of this solution was adjusted to three different levels and each sample was held for 22 hours at 100°C during which time the samples were monitored for hazing and phase separation. The results for these samples indicated as 4A, 4B and 4C, are shown in Table 6. No change from the initial pH of any of the samples occurred as a result of the heat treatment.

Table 6

| Sample | 4A | 4B | 4C | 4D | 4E |
|---|---|---|---|---|---|
| % urea | 0 | 0 | 0 | 1.2 | 0.5 |
| initial pH | 3.18 | 2.16 | 2.57 | 2.79 | 2.59 |
| final pH | 3.18 | 2.16 | 2.57 | 4.54 | 3.06 |
| minutes to initial haze | 0 | none | none | 5 | 15 |
| phase separation after 22 hours | moderate | none | none | moderate | moderate |

As indicated in Table 6, no phase separation occurred at pH's 2.16 to 2.57 over a period of 24 hours. However, immediate hazing and phase separation of a moderate amount of an opaque bottom layer was observed at a pH of 3.18.

Urea in the amounts of 1.2 and 0.5 wt.% based on the weight of the solution was added to two solutions with initial pH's of 2.79 and 2.59 respectively. Following the same protocol as before, the results for these samples indicated as 4D and 4E are also shown in Table 6. The results show that the initial hazing can be delayed to 5 minutes and 15 minutes respectively. By further reducing initial pH and urea concentration, it is expected that phase separation can be delayed even more.

Example 5

This example illustrates that urea can be utilized to provide a time-delayed phase separation of a sparingly soluble magnesium salt of phosphino-polyacrylic acid (PPA) at 100°C.

A solution was prepared of 3.52 wt.% PPA and 1.0 wt.% of magnesium ions added as magnesium chloride hexahydrate in sea water at a pH of 3.06. The solution was held at 18 hours at 100°C and observed for hazing and phase separation. No phase separation and no change from the initial pH occurred as a result of the heat treatment.

Urea in an amount of 0.83 wt.% based on the weight of the solution was added to a fresh sample of the above solution. When held in a 100°C bath, phase separation occurred sometime between 3.25 hours to 18.25 hours. Analysis of the separated clear phase indicates that it contained 24% of the PPA originally charged.

## Claims

1. A method for the inhibition of scale deposition on the surfaces of a well coproducing oil and scale forming brines comprising injecting into the well reservoir an acidic (aqueous) solution at a first pH containing dissolved therein a scale inhibitor, multivalent metal ions, and a heat sensitive pH increasing substance which decomposes at elevated temperatures liberating an alkaline compound such that the solution is inherently heated by the higher ambient reservoir temperature to a temperature at which the alkaline compound is liberated from the heat sensitive substance thus raising the pH of the solution to a point at which a sparingly soluble multivalent metal salt of the scale inhibitor is phase separated from the solution on the porous surfaces of the reservoir rock formation, providing for a slow release of inhibitor into the produced brines when the well is in its production phase.

2. A method according to claim 1 wherein said inhibitor is a polymeric polycarboxylate or a phosphonate.

3. A method according to claim 2 wherein said polycarboxylate is a polyacrylic acid.

4. A method according to claim 3 wherein said polyacrylic acid is a phosphino-polyacrylic acid.

5. A method of according to claim 2 wherein said phosphonate is an aminomethylenephosphonate.

6. A method according to claim 2 wherein said phosphonate is a polymeric phosphonate.

7. A method according to any preceding claim wherein said multivalent metal ions are alkaline earth, aluminum (+3) chromium (+3), iron (+3), titanium (+3), zirconium (+4), zinc (+2) or copper (+2).

8. A method according to claim 7 wherein said multivalent metal ions are calcium or magnesium.

9. A method according to any preceding claim wherein said heat sensitive substance is urea or a urea derivative having the formula

$$R^1R^2NCONR^3R^4$$

where the R's are the same or different and each is hydrogen, an alkyl group containing 1 to 8 carbon atoms or an aromatic group.

10. A method according to any preceding claim wherein said heat sensitive substance is urea.

11. An acidic aqueous solution containing dissolved therein a scale inhibitor, multivalent metal ions, and a heat sensitive, pH-increasing substance which decomposes at elevated temperatures liberating an alkaline compound.

12. A composition according to claim 11 wherein said inhibitor is a polymeric polycarboxylate or a phosphonate.

13. A composition according to claim 12 wherein said polycarboxylate is a polyacrylic acid.

14. A composition according to claim 13 wherein said polyacrylic acid is a phosphino-polyacrylic acid.

15. A composition according to claim 12 wherein said phosphonate is an aminomethylenephosphonate.

16. A composition according to claim 12 wherein said phosphonate is a polymeric phosphonate.

17. A composition of any claims 11 to 16 wherein said multivalent metal ions are alkaline earth, aluminum (+3), chromium (+3), iron (+3), titanium (+3), zirconium (+4), zinc (+2) or copper (+2).

18. A composition according to claim 17 wherein said multivalent metal ions are calcium or magnesium.

19. A composition according to any of claims 11 to 18 wherein said heat sensitive substance is urea or a urea derivative having the formula

$$R^1R^2NCONR^3R^4$$

where the R's are the same or different and each is hydrogen, an alkyl group containing 1 to 8 carbon atoms or an aromatic group.

20. A composition according to claim 19 wherein said heat sensitive substance is urea.

21. A composition according to any of claims 11 to 20 wherein said inhibitor is present in an amount of substantially 0.25 to 15 wt.% based on the weight of the solution, said metal ions are present in an amount of substantially 0.05 to 5.0 equivalents per equivalent of inhibitor, and said heat sensitive substance is present in an amount of substantially 0.01 to 5.0 wt.% based on the weight of the solution.

## Patentansprüche

1. Verfahren zur Verhinderung der Bildung von Ablagerungen auf der Oberfläche einer Bohrung, die gleichzeitig Öl und Ablagerungen bildende Sole produziert, wobei das Verfahren die Schritte umfaßt: Einspritzen einer sauren (wäßrigen) Lösung in das Trägergestein der Bohrung, wobei die Lösung einen ersten pH-Wert aufweist und einen Ablagerungsinhibitor, multivalente Metallionen und eine wärmeempfindliche, den pH-Wert erhöhende Substanz in gelöster Form enthält, wobei sich letztere bei erhöhter Temperatur zersetzt und dabei eine alkalische Verbindung freisetzt, so daß sich die Lösung aufgrund der in dem Trägergestein herrschenden höheren Temperaturen in sich auf eine Temperatur erwärmt, bei der die alkalische Verbindung aus der wärmeempfindlichen Substanz freigesetzt und der pH-Wert der Lösung auf einen Wert erhöht wird, bei dem sich ein schwerlösliches, multivalentes Metallsalz des Ablagerungsinhibitors aus der Lösung auf der porösen Oberfläche der Trägergesteinsformation als getrennte Phase abscheidet und für eine langsame Abgabe des Inhibitors an die produzierte Sole während der Produktionsphase der Bohrung sorgt.

2. Verfahren nach Anspruch 1, bei dem der Inhibitor ein polymeres Polycarboxylat oder ein Phosphonat ist.

3. Verfahren nach Anspruch 2, bei dem das Polycarboxylat eine Polyacrylsäure ist.

4. Verfahren nach Anspruch 3, bei dem die Polyacrylsäure eine Phosphinopolyacrylsäure ist.

5. Verfahren nach Anspruch 2, bei dem das Phosphonat ein Aminomethylenphosphonat ist.

6. Verfahren nach Anspruch 2, bei dem das Phosphonat ein polymeres Phosphonat ist.

7. Verfahren nach einem der vorstehenden Ansprüche, bei dem die multivalenten Metallionen Erdalkalien, Aluminium (+3), Chrom (+3), Eisen (+3), Titan (+3), Zirconium (+4), Zink (+2) oder Kupfer (+2) sind.

8. Verfahren nach Anspruch 7, bei dem die multivalenten Metalionen Calcium oder Magnesium sind.

9. Verfahren nach einem der vorstehenden Ansprüche, bei dem die wärmeempfindliche Substanz Harnstoff oder ein Harnstoffderivat mit der Formel

$$R^1R^2NCONR^3R^4$$

ist, wobei die Reste R gleich oder verschieden sind und jeweils Wasserstoff, einen Alkylrest mit 1-8 Kohlenstoffatomen oder eine aromatische Gruppe bedeuten.

10. Verfahren nach einem der vorstehenden Ansprüchen, bei dem die wärmeempfindliche Substanz Harnstoff ist.

11. Eine saure, wäßrige Lösung, die einen Ablagerungsinhibitor, multivalente Metallionen und eine wärmeempfindliche, den pH-Wert erhöhende Substanz in gelöster Form enthält, wobei sich letztere bei erhöhten Temperaturen zersetzt und dabei eine alkalische Verbindung freisetzt.

12. Zusammensetzung nach Anspruch 11, bei der der Inhibitor ein polymeres Polycarboxylat oder ein Phosphonat ist.

13. Zusammensetzung nach Anspruch 12, bei der das Polycarboxylat eine Polyacrylsäure ist.

14. Zusammensetzung nach Anspruch 13, bei der die Polyacrylsäure eine Phosphinopolyacrylsäure ist.

15. Zusammensetzung nach Anspruch 12, bei der das Phosphonat ein Aminomethylenphosphonat ist.

16. Zusammensetzung nach Anspruch 12, bei der das Phosphonat ein polymeres Phosphonat ist.

17. Zusammensetzung nach einem der Ansprüche 11 bis 16, bei der die multivalenten Metallionen Erdalkalien, Aluminium (+3), Chrom (+3), Eisen (+3), Titan (+3), Zirconium (+4), Zink (+2) oder Kupfer (+2) sind.

18. Zusammensetzung nach Anspruch 17, bei der die multivalenten Metallionen Calcium oder Magnesium sind.

19. Zusammensetzung nach einem der Ansprüche 11 bis 18, bei der die wärmeempfindliche Substanz Harnstoff oder ein Harnstoffderivat mit der Formel

$$R^1R^2NCONR^3R^4$$

ist, wobei die Reste R gleich oder verschieden sind und jeweils Wasserstoff, einen Alkylrest mit 1-8 Kohlenstoffatomen oder eine aromatische Gruppe bedeuten.

20. Zusamensetzung nach Anspruch 19, bei der die wärmeempfindliche Substanz Harnstoff ist.

21. Zusammensetzung nach einem der Ansprüche 11 bis 20, bei der der Inhibitor in einer Menge von im wesentlichen 0,25 bis 15 Gew.-%, bezogen auf das Gewicht der Lösung, vorhanden ist, wobei die Metallionen in einer Menge von im wesentlichen 0,05 bis 5,0 Äquivalenten pro Äquivalent Inhibitor vorhanden sind und die wärmeempfindliche Substanz in einer Menge von im wesentlichen 0,01 bis 5,0 Gew.-%, bezogen

auf das Gewicht der Lösung, vorhanden ist.

## Revendications

1. Un procédé permettant l'inhibition du dépôt de tartre sur les surfaces d'un puits coproduisant du pétrole et des saumures génératrices de tartre qui comprend l'injection dans le réservoir du puits d'une solution (aqueuse) acide présentant un premier pH, dans laquelle est dissout un inhibiteur de tartre, des ions de métaux multivalents et une substance augmentant le pH, sensible à la chaleur et se décomposant à des températures élevées en libérant un dérivé alcalin, procédé dans lequel la solution est chauffée de façon inhérente par la température ambiante régnant dans la partie supérieure du réservoir jusqu'à une température à laquelle le dérivé alcalin est libéré à partir de la substance sensible à la chaleur, ce qui entraîne l'augmentation du pH de la solution jusqu'à une valeur à laquelle une phase formée d'un sel de métal multivalent faiblement soluble de l'inhibiteur de tartre se sépare de la solution et se fixe sur les surfaces poreuses de la formation de la roche dont est formé le réservoir, conduisant à une libération lente de l'inhibiteur dans les saumures produites lorsque le puits est en phase de production.

2. Un procédé selon la revendication 1, caractérisé en ce que ledit inhibiteur est un polycarboxylatepolymère ou un phosphonate.

3. Un procédé selon la revendication 2, caractérisé en ce que ledit polycarboxylate est un acide polyacrylique.

4. Un procédé selon la revendication 3, caractérisé en ce que ledit acide polyacrylique est un acide phosphino-polyacrylique.

5. Un procédé selon la revendication 2, caractérisé en ce que ledit phosphonate est un aminométhylènephosphonate.

6. Un procédé selon la revendication 2, caractérisé en ce que ledit phosphonate est un phosphonatepolymère.

7. Un procédé selon l'une quelconque des revendications précédentes, caractérisé en ce que lesdits ions de métaux multivalents sont des ions de métaux alcalins, d'aluminium (+3), de chrome (+3), de fer (+3), de titane (+3), de zirconium (+4), de zinc (+2) ou de cuivre (+2).

8. Un procédé selon la revendication 7, caractérisé en ce que les ions de métaux multivalents sont des ions calcium ou magnésium.

9. Un procédé selon l'une quelconque des revendications précédentes, caractérisé en ce que ladite substance sensible à la chaleur correspond à l'urée ou à un dérivé d'urée représenté par la formule:

$$R^1R^2NCONR^3R^4$$

dans laquelle les groupes R, qui peuvent être identiques ou différents, représentent un atome d'hydrogène ou un radical alkyle contenant de 1 à 8 atomes de carbone ou un groupe aromatique.

10. Un procédé selon l'une quelconque des revendications précédentes, caractérisé en ce que ladite substance sensible à la chaleur est l'urée.

11. Une solution aqueuse acide contenant à l'état dissous un inhibiteur de tartre, des ions de métaux multivalents et une substance augmentant le pH, sensible à la chaleur et se décomposant à des températures élevées en libérant un composé alcalin.

12. Une solution selon la revendication 11, caractérisée en ce que ledit inhibiteur est un polycarboxylatepolymère ou un phosphonate.

13. Une solution selon la revendication 12, caractérisée en ce que ledit polycarboxylate est l'acide polyacrylique.

14. Une solution selon la revendication 13, caractérisée en ce que ledit acide polyacrylique est un acide phosphino-polyacrylique.

15. Une solution selon la revendication 12, caractérisée en ce que ledit phosphonate est un aminométhylènephosphonate.

16. Une solution selon la revendication 12, caractérisée en ce que ledit phosphonate est un phosphonatepolymère.

17. Une solution selon l'une quelconque des revendications 11 à 16, caractérisée en ce que lesdits ions de métaux multivalents sont des ions de métaux alcalins, d'aluminium (+3), de chrome (+3), de fer (+3), de titane (+3), de zirconium (+4), de zinc (+2) ou de cuivre (+2).

18. Une solution selon la revendication 17, caractérisée en ce que les ions de métaux multivalents sont des ions calcium ou magnésium.

19. Un solution selon l'une quelconque des revendications 11 à 18, caractérisée en ce que ladite substance sensible à la chaleur est l'urée ou un dérivé d'urée représenté par la formule:

$$R^1R^2NCONR^3R^4$$

dans laquelle les groupes R, qui peuvent être identiques ou différents les uns des autres, représentent un atome d'hydrogène ou un radical alkyle contenant 1 à 8 atomes de carbone ou un groupe aromatique.

20. Une solution selon la revendication 19, caractérisée en ce que ladite substance sensible à la chaleur est l'urée.

21. Une solution selon l'une quelconque des revendications 11 à 20, caractérisée en ce que ledit inhibiteur est présent en une quantité représentant sensiblement 0,25 à 15% en poids par rapport au poids de la composition, lesdits ions métalliques sont présents en une quantité représentant sensiblement 0,05 à 5,0 équivalents par équivalent d'inhibiteur et ladite substance sensible à la chaleur est présente en une quantité représentant sensiblement 0,01 à 5,0% en poids par rapport au poids de la solution.